# EUROPEAN PATENT APPLICATION

(11) **EP 2 490 423 A1**
(43) Date of publication of application: **22.08.2012**
(21) Application number: 11154568.7
(22) Date of filing: 15.02.2011
(51) Int. Cl.: H04M 3/32, H04W 24/08

(54) **A bypass detection system resembling human behaviour**

(71) Applicant: Meucci Solutions NV, 9050 Gent-Ledeberg (BE)
(72) Inventor: Van der Meeren, Guy, 9052 Gent (BE); Tuytte, Conrad, 9070 Destelbergen (BE); De Bontridder, Lieven, 9500 Geraardsbergen (BE); Philips, Peter, 1910 Kampenhout (BE); Mouton, Kenneth, 9000 Gent (BE); Verlinde, Dirk, 8650 Houtshulst (BE)
(74) Representative: Plas, Axel Ivo Michel

(57) **Abstract**

There is provided a control system (40) for a system (1) for detection of a bypass (540) of an interconnect (530) to a telecommunication network (50), said control system (40) configured to:
• initiate one or more test calls between at least one means (10) adapted to originate a test call to a telecommunication network (50) under test from outside the telecommunication network (50) under test; and at least one receiver probe (20) with a subscription (201, 202) for terminating said test call;
• receive from the receiver probe (20) call information comprising a received calling line identification (CLI) of the respective test calls; and
• analyse the received calling line identification (CLI) such that presence of the bypass (540) can be detected.

According to the invention a number of said test calls is picked up by said receiver probe (20).

## Description

### Field of the Invention

The present invention generally relates to a system for detection of an interconnect bypass in telecommunication networks, especially in wireless telecommunication networks such as for example of the type GSM, UMTS or similar, but also in wired telecommunication networks.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by setting up a new call making use of end user facilities of the receiving operator, the CLI of the calling party will be replaced with the CLI of the new call. This leads to inconveniences for the receiving parties which receive an erroneous or no CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and WO2008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators.

A known system that overcomes the abovementioned drawbacks is the Meucci system as described on their website: http://www.meucci-solutions.com. This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system.

One problem with these systems that make use of test calls is that they have an easily identifiable calling behaviour. In order to limit costs of testing call attempts are favoured over answered calls. The bypass detection as described only requires a call attempt and does not require an answered call. So if for instance ten thousand test calls are to be made, the cost of making ten thousand call attempts is vastly different from the cost of making ten thousand calls that are answered, because in most cases call attempts are not charged. Therefor call attempts are preferred over answered calls. However, this makes the calling pattern more different from normal, predominantly human, calling patterns and thus easier to identify. Furthermore, such test call systems are computer driven and may show a fixed or easy to identify calling pattern of start time, ringing duration, etc. This makes it easy for the bypass operators to detect and identify the means for originating the test calls and/or the subscriptions used in the receiver probes for receiving the test call. These bypass operators can then subsequently blacklist these specific means and/or subscriptions in order to avoid detection.

As such there is a need for a system that can provide real time information about the availability of a bypass. This system should be able to be operated by third parties and should not require access to sensitive data of the telecommunication network operator. The system should also have a decreased risk of counter-detection by a bypass operator. The system should also be able to decrease the risk of counterdetection without unduly increasing the associated cost.

### Summary of the Invention

According to a first aspect of the invention there is provided a control system for a system for detection of a bypass of an interconnect to a telecommunication network , said control system configured to:
- initiate one or more test calls between at least one means adapted to originate a test call to a telecommunication network under test from outside the telecommunication network under test; and at least one receiver probe with a subscription for terminating said test call;
- receive from the receiver probe call information comprising a received calling line identification of the respective test calls; and
- analyse the received calling line identification such that presence of the bypass can be detected,
CHARACTERIZED IN THAT said control system is configured to instruct said receiver probe to pick up a number of said test calls.

By picking up a number of the test calls the answer/seizure ratio, this is the number of successfully answered calls divided by the total number of calls attempted (seizures) multiplied by one hundred, of the associated means and/or subscriptions will be closer to that of normal human calling behaviour and thus make it more difficult for the bypass operators to identify.

According to an embodiment of the invention said control system is configured to instruct said receiver probe to pick up only a number of test calls on suspect routes.

While reducing the risk of counter detection this additionally keeps the system efficient as no time or money is wasted on picking up the test call for routes that do not seem to contain a bypass. In this application the term "route" is used for all means on a specific telecom operator or telecom provider that guide a specific test call from where it was originated to a specific receiving subscription or operator, subject to routing rules through various telecommunication networks. A suspect route is a route for a specific test call for which the control system has previously detected or is in the process of detecting a bypass.

According to a further embodiment of the invention said control system is configured to instruct said receiver probe to pick up only between 20% to 70%, preferably 40% of test calls on suspect routes. These answer/seizure ratios should be based on normal industry ratio's, such that there is little difference between what is artificially created by the test system and what would be the expected normal behaviour for the body managing or operating the route. In general the ASR varies between 50 and 70%.

These answer/seizure rates offer a good compromise between efficiency of execution of the test calls and avoiding counter detection by the bypass operator.

According to still a further embodiment of the invention said control system (40) is configured to instruct said receiver probe (20) to pick up the test call on suspect routes based on said analysis of the received calling line identification (CLI).

The received CLI is transmitted just before or after the first ring. The analysis of the CLI which leads to the detection of the presence of a bypass can thus be performed while the test call is ringing and on the basis of the outcome it can be decided whether to pick up the test call or not. This allows for an efficient, real time system with capabilities to avoid counter detection by the bypass operator.

According to still a further embodiment said control system is further configured to instruct said means and/or said receiver probe to randomize one or more test call parameters, such as one or more of the following:
- start time of a test call;
- duration of a test call;
- ringing duration of a test call; and
- timing of one or more signalling messages of a test call.

The random behaviour removes the ability for counter detection of the systematic calling behaviour of prior art test calls.

According to still a further embodiment said control system is further configured to instruct said means and/or said receiver probe to inject content in said test calls, such as one or more of the following:
- DTMF tones;
- noise; and
- speech.

In this way the test calls even more closely resemble normal human calling behaviour which reduces the risk of counter detection.

According to a further embodiment the control system at least partly is comprised within said receiver probe.

The control system can thus optionally be implemented in a distributed way, for example in order to speed up processing.

According to a second aspect of the invention there is provided a system for detection of a bypass of an interconnect to a telecommunication network, said system comprising a control system according to any of the preceding claims, said system further comprising:
- at least one means adapted to originate a test call to a telecommunication network under test from outside the telecommunication network under test; and
- at least one receiver probe with a subscription for terminating said test call.

According to an advantageous embodiment said subscription for terminating said test call is configured with calling line identification restriction override (CLIRO).

This allows to overcome difficulties for detecting and disabling a bypass when the bypass operator makes use of the CLIR function in order to mask the calling line identification of their bypass equipment. This enables to identify and subsequently disable the subscriptions that are being used by a bypass even if the bypass operator makes use of the CLIR function. When third parties provide the system for detection of a bypass as a service to a telecommunication network operator this requires neither access sensitive data like for example billing date nor complex technical interfaces to provide that access. The third party only requires access to a subscription configured with CLIRO for terminating the test call.

According to a third aspect of the invention there is provided a method for detecting a bypass of an interconnect to a telecommunication network under test, said method comprising the steps of:
- the means originating a test call to said telecommunication network under test from outside the telecommunication network under test;
- the at least one receiver probe with a subscription terminating said test call; and
- a control system initiating the test call; receiving from the receiver probe call information comprising a received calling line identification of the test call; and analysing the received calling line identification such that presence of the bypass can be detected,
CHARACTERISED IN THAT THAT the method comprises the further step of the control system instructing the receiver probe to pick up a number of said test calls.

### Brief Description of the Drawings

Fig. 1 illustrates an embodiment according to the invention without the presence of a bypass; and

Fig. 2 illustrates the embodiment according to Figure 1 with the presence of a bypass.

### Detailed Description of Embodiment(s)

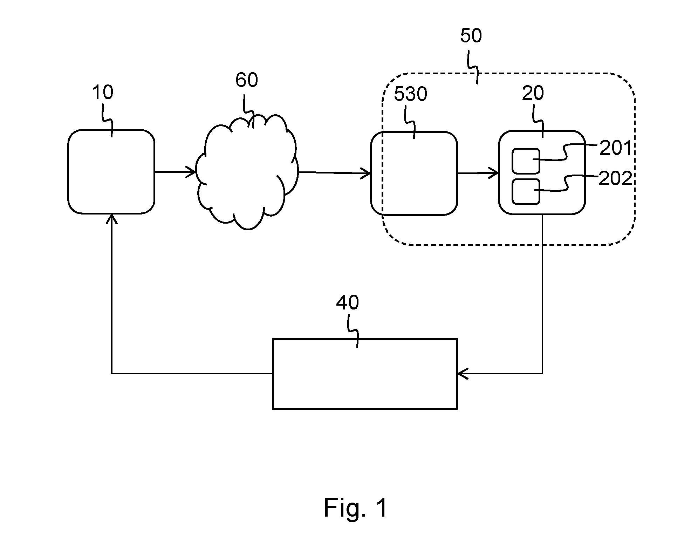

Figure 1 shows a system 1 for detection of a bypass of an interconnect 530 to a telecommunication network 50 under test. The system 1 according to the invention comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, a telephone number providing access to voip systems, call back mechanisms, any type of pc originating calls, a suitable subscription to mobile networks such as for example a SIM card, wireline networks or call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with a subscription for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with a subscription for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, ....

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then receives the incoming test call. It is not required for the receiver probe 20 to actually answer the test call. The control system 40 could for example be configured in such a way that it instructs means 10 to initiate the test call to the receiver probe 20 and to automatically disconnect the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected.

As the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. If this analysis of the received CLI indicates the calling party of the test call is not from within the telecommunication network under test, no bypass was detected. Thus as soon as the analysis is able to ascertain that the received CLI does not belong to the numbering plan associated with the telecommunication network 50 under test, no bypass within the network under test was detected. In order to also take into account number portability the analysis could comprise a check if the received CLI comprises a number which is comprised in the number database of the telecommunication network 50 under test. If this is not the case, no bypass within the network under test was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

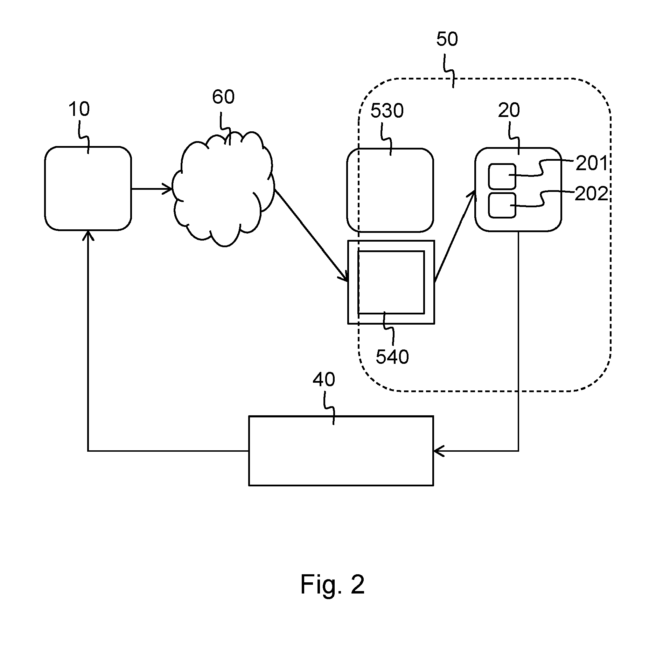

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50, "+32 474 111 222", and to the same destination and as such bypass the interconnect 530. However when the control system 40 now receives the receiver call information from the receiver probe 20 that received the test call initiated from means 10, the received CLI, "+32 474 111 222" will not match the calling party number, "+44 20 1234 5678", associated with means 10. This is because instead of the calling party number of means 10, the calling party number of one of the subscriptions in the bypass 540, "+32 474 111 222", will be in the CLI received by receiver probe 20. The control system 40 is then able to assess that a bypass 530 is present.

As explained above because the means 10 originates the test call from outside the telecommunication network 50 under test, the presence of a bypass 540 can be detected if the received CLI belongs to a subscription to the telecommunication network 50 under test. This can be implemented by checking whether the received CLI comprises a prefix which belongs to the numbering plan of the telecommunication network 50 under test "+32 474 xxx xxx" or when to also take into account number portability by checking whether the received CLI comprises a number which is comprised in the number database of the telecommunication network 50 under test.

It is clear that the test call results in an identifiable call pattern. The test call after initiation allows for a few rings and is then ended without being picked up. Even when the system 1 initiates, originates, receives and analyses a plurality of test calls between a plurality of means 10 and a plurality of receiver probes 20, this identifiable call pattern would enable the bypass operator to easily identify each of those means 10 and/or the subscriptions 201, 202 for terminating the test call used in the receiver probes 20 as the test calls from these means 10 to the these terminating subscriptions 201, 202 are usually not picked up as explained above. The bypass operator or carrier 60 could then blacklist the means 10 and/or the subscriptions 201, 202 for terminating the test call used in the receiver probes 20 and stop routing calls from or to the bypass 540 in order to avoid detection by the system 1.

The system 1 therefor implements counter measures to avoid discovery. The common concept behind these countermeasures is that the system 1 tries to more closely align with normal human calling patterns instead of the calling pattern associated with prior art systems for identifying a bypass 540.

In a first embodiment according to the invention this is implemented by configuring system 1, generally by means of its control system 40, to pick up a number of the test calls that are originated by one or more means 10. This will make it more difficult for the bypass operators, or carriers 60 up front involved with routing call traffic to the bypass operators, to detect, by analysing the calling behaviour towards the respective receiver probes 20, the subscriptions 201, 202 used for terminating the respective test calls and also the respective means 10 used as calling parties to originate the respective test calls. It is not essential to pick up all the test calls. If for example ten test calls are initiated by the system 1, four of them could be picked up and the remaining six could still be left unanswered. This allows making a trade-off between the risk of counter detection and the cost associated with picking up the test call. According to a first possibility the control system 40 for deciding whether to pick up a call could be implemented in the receiver probe 20 itself, but it is equally possible to let the receiver probe 20 be instructed by a separate control system 40 to pick up a specific test call. Or any suitable combination is possible such as for example a distributed control system (40) comprised at least partly within at least one receiver probe (20) and optionally also comprising a separate device forming part of this control system (40).

According to an advantageous embodiment of the system 1 according to the invention a number of test calls is only picked up by the receiver probe 20 if they originated from a suspect route. This means that an analysis of earlier test calls determined previously that a specific route, this is a test call from a specific means 10 or set of means 10 outside the network 50 under test to the network 50 under test, contained a bypass 540. The receiver probe 20 could determine based on information from the control system 40 or optionally provided by means 10 or the time at which the test call was scheduled when exactly a test call on a specific suspect route was received. By limiting the receiver probe 20 to only pick up test calls along this suspect route the cost associated with picking up test calls is further minimized while not unnecessary increasing the risk for counter detection. The Answer/Seizure ratio (ASR) of these test calls, which is the number of picked up calls divided by the total number of calls attempted multiplied by 100, must not necessarily be as high as that associated with normal human behaviour which is normally higher than 50%. The ASR should however be closer to that of normal human behaviour then not picking up any test calls at all. In this respect the ASR of these test calls could vary in the range of 20% to 70%, such as for example 40%.

According to a further advantageous embodiment determination of a suspect route is made in real time by analysis of the received CLI during the test call. As the CLI is transmitted just before or after the first ring, the analysis of the CLI which leads to the detection of the presence of a bypass can thus be performed while the test call is ringing. The control system 40 instructs the receiver probe 20 to pick up the test call or not on the basis of the outcome of this analysis of the CLI. This enables a system with real time flexibility, enhanced economy and which is simple in implementation as no data of previous test calls needs to be stored and/or analysed for determination of suspect routes.

According to still a further embodiment in order to still further approach the calling pattern associated with human behaviour certain of the test call parameters such as the test the start time of a test call, duration of a test call, ringing duration of a test call, etc. or any suitable combination of these parameters could be randomized or could be provided with a pattern that resembles human behaviour. For example instead of a fixed calling pattern for initiating ten test calls every five minutes, the interval between these test calls could be randomized to select random intervals between the initiation of the respective test calls for example in a range between one and ten minutes. Alternatively instead of setting a fixed number of rings to be allowed for all initiated test calls, whether the control system instructed the receiver probe 20 to pick up or not, a randomized amount of rings could be set up, for example allowing between two and seven rings before picking up or closing ending the test call. For a test call that is answered also the call duration could be randomized, for example between thirty seconds and five minutes. All these call parameter randomisations or any suitable combination of them allow to decrease the risk of counter detection because they avoid the availability of a fixed calling pattern that could be detected by the bypass 540 operators in an attempt to counter detect system In order to still further randomise the calling behaviour associated with the test calls said system is optionally further configured to randomize the timing of one or more signalling messages, such as for example: SS7 Initial Address Message (IAM); Address Complete Message (ACM); Answer Message (ANM), and similar signalling messages; or SIP Invite, Progress, OK, Ack, Bye, and similar signalling messages. It is clear that equivalent signalling messages in use on the telecommunication network to user interface and other technologies also can be considered to be randomised. These signalling messages are for example described in the call flow charts in SS7 specifications (ITU, 3GPP TS 03.18 ...), SIP specifications (RFC3261) and similar specifications for other technologies.

Still a further possibility to further approach human call pattern behaviour is implemented in an embodiment according to the invention by injecting content in the test calls. This content could for example be DTMF tones, noise and/or speech. This avoids the possibility for counter detection by an analysis of the test call content. The test calls even when picked up namely don't contain any content. By injecting content into these test calls the risk for counter detection can even further be reduced. The content could be generated by the means 10 and/or receiver probe 20 in a simple way by for example generating DTMF tones. This capability is available anyhow to means 10 for dialling the test call. As mentioned above noise or recorded speech by for example playing a suitable sound file from a suitable device, such as for example an answering machine, a computer, an mp3 player, ....

When using the system 1, there exists a risk that the operator of bypass 540 makes use of the CLIR function such that the system 1 would not be able to guarantee the detection of the presence and/or subsequent disabling of a bypass 540. The signals exchanged between telecommunication networks namely comprise two fields, a CLI field which contains the calling party telephone number and a presentation indicator (PI) which indicates whether the CLI can be shown or not. The PI has three states: "available" means that there is a CLI and it can be shown, "unavailable" means that there is no CLI present and "restricted" means that there is a CLI present, but it cannot be shown. When the operator of bypass 540 enables the CLIR function for the subscriptions the bypass 540 makes use of, the last switch in the path will not pass on the CLI to the terminating subscription used in the receiver probe 20. A more detailed description of the CLIR function can for example be found in the ITU CCITT I.251.4 specification or the 3GPP TS 24.081 specification.

Therefore the system according to the invention makes use of a receiver probe 20 that comprises a subscription configured with a calling line identification restriction override (CLIRO) function. This is a feature implemented in the equipment of the telecommunication network 50. The feature will instruct the final switch in the path of the test call to ignore the PI if it is set to "restricted" and still pas on the CLI to the terminating subscription of the receiver probe 20. Then, even if the bypass 540 makes use of a CLIR function the receiver probe 20 will always be able to detect the CLI of the incoming test call. This will enable the system 1 to detect and/or subsequently disable the specific subscriptions that are in use in the bypass 540.

In general the method for detecting the bypass 540 of the interconnect 530 to a telecommunication network 50 under test thus comprises the following steps:
- the means 10 originate one or more tests call to said telecommunication network 50 under test from outside the telecommunication network 50 under test;
- the at least one receiver probe 20 terminates said test calls and picks up a number of these test calls; and
- the control system 40 initiates the test calls; receives from the receiver probe 20 call information comprising a received CLI of the test call; and analyses the received CLI such that presence of the bypass 540 can be detected.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A control system (40) for a system (1) for detection of a bypass (540) of an interconnect (530) to a telecommunication network (50), said control system (40) configured to:
• initiate one or more test calls between at least one means (10) adapted to originate a test call to a telecommunication network (50) under test from outside the telecommunication network (50) under test; and at least one receiver probe (20) with a subscription (201, 202) for terminating said test call;
• receive from the receiver probe (20) call information comprising a received calling line identification (CLI) of the respective test calls; and
• analyse the received calling line identification (CLI) such that presence of the bypass (540) can be detected,
**CHARACTERIZED IN THAT** said control system (40) is configured to instruct said receiver probe (20) to pick up a number of said test calls.

2. A control system according to claim 1, wherein said control system (40) is configured to instruct said receiver probe (20) to pick up only a number of test calls on suspect routes.

3. A control system according to claim 2, wherein said control system (40) is configured to instruct said receiver probe (20) to pick up only between 20% to 70%, preferably 40% of test calls on suspect routes.

4. A control system according to any one of the preceding claims, wherein said control system (40) is configured to instruct said receiver probe (20) to pick up the test call on suspect routes based on said analysis of the received calling line identification (CLI).

5. A control system according to any one of the preceding claims, wherein said control system (40) is configured to instruct said means (10) and/or said receiver probe (20) randomize one or more test call parameters.

6. A control system according to claim 5, wherein said test call parameters comprise one or more of the following:
• start time of a test call;
• duration of a test call;
• ringing duration of a test call; and
• timing of one or more signalling messages of a test call.

7. A control system according to any one of the preceding claims, wherein said control system (40) is configured to instruct said means (10) and/or said receiver probe (20) to inject content in said test calls.

8. A control system according to claim 7, wherein said content comprises one or more of the following:
• DTMF tones;
• noise; and
• speech.

9. A control system according to any of the preceding claims, **characterised in that** the control system (40) at least partly is comprised within said receiver probe (20).

10. A system (1) for detection of a bypass (540) of an interconnect (530) to a telecommunication network (50), **characterised in that** said system (1) comprises a control system according to any of the preceding claims, said system (1) further comprising:
• at least one means (10) adapted to originate a test call to a telecommunication network (50) under test from outside the telecommunication network (50) under test; and
• at least one receiver probe (20) with a subscription (201, 202) for terminating said test call.

11. A system according to claim 10, wherein said subscription (201, 202) for terminating said test call is configured with calling line identification restriction override (CLIRO).

12. A method for detecting a bypass (100) of an interconnect (30) to a telecommunication network (50) under test, said method comprising the steps of:
• the means (10) originating a test call to said telecommunication network (50) under test from outside the telecommunication network (50) under test;
• the at least one receiver probe (20) with a subscription terminating said test call; and
• a control system (40) initiating the test call; receiving from the receiver probe (20) call information comprising a received calling line identification (CLI) of the test call; and analysing the received calling line identification (CLI) such that presence of the bypass (100) can be detected,
**CHARACTERISED IN THAT** the method comprises the further step of the control system (40) instructing the receiver probe (20) to pick up a number of said test calls.

13. A method according to claim 12, wherein only a number of test calls are picked up by said receiver probe (20) on suspect routes.

14. A method according to claim 13, wherein only between 20% to 70%, preferably 40% of test calls are picked up by said receiver probe (20) on suspect routes.

15. A method according to any one of the claims 12 to 14, wherein whether the test call is picked up by said receiver probe (20) on suspect routes is determined by the analysis of the received calling line identification (CLI).
